# EUROPÄISCHE PATENTSCHRIFT

(11) **EP 0 411 400 B1**
(45) Veröffentlichungstag und Bekanntmachung des Hinweises auf die Patenterteilung: **30.11.1994**
(21) Anmeldenummer: 90113826.3
(22) Anmeldetag: 19.07.1990
(51) Int. Cl.: C08G 69/48, C08G 73/02

(54) **Basische Kondensate**
Basic condensates
Condensates basiques

(30) Priorität: 01.08.1989 DE 3925439
(43) Veröffentlichungstag der Anmeldung: 06.02.1991
(73) Patentinhaber: BAYER AG, 51368 Leverkusen (DE)
(72) Erfinder: Reiners, Jürgen, Dr., D-5090 Leverkusen 1 (DE); Meyer, Rolf-Volker, Dr., D-4150 Krefeld (DE); Leiritz, Karl, Dr., D-4019 Monheim (DE); Bachem, Henning, Dr., D-5000 Köln 80 (DE); Muszik, Janos, Dr., D-5090 Leverkusen 1 (DE)

(56) Entgegenhaltungen:
- DE-A- 2 756 469
- DE-A- 3 721 057

## Beschreibung

Die vorliegende Erfindung betrifft basische Kondensate, die als Mittel zur Erhöhung der Retention von Fasern, Füllstoffen und Pigmenten sowie zur Beschleunigung der Entwässerung bei der Papierherstellung und als Flockungsmittel bei der Aufarbeitung von Abwässern der Papierherstellung durch Filtration, Sedimentation und Flotation Verwendung finden.

Aus der Deutschen Offenlegungsschrift 2 756 431 sind Polyamine mit blockartigen Strukturen aus Polyamidamin und Polyalkylenpolyamin bekannt, die durch Kondensation von Gemischen aus basischen Polyamidaminen und Polyalkylenpolyaminen mit funktionellen Verbindungen wie Epichlorhydrin oder 1,2-Dichlorethan zugänglich sind.

Die Europäische Patentanmeldung 0 002 475 beschreibt Kondensate aus Polyamidaminen und polyfunktionellen Verbindungen, die sich von den erfindungsgemäßen Polykondensaten durch ein höheres Molverhältnis Polyalkylenpolyaminen zu Dicarbonsäuren sowie durch ein höheres Molverhältnis von polyfunktionellen Verbindungen zu Basenstickstoff im Polyamidamin unterscheiden.

In der Deutschen Auslegeschrift 1 771 814 sind ebenfalls wasserlösliche Kondensate aus Polyamidaminen und polyfunktionellen Verbindungen beschrieben. Die Herstellung der Polyamidamine erfolgt durch Kondensation von äquimolaren Mengen an Dicarbonsäure und Polyaminen und Aminocarbonsäuren bzw. Lactamen. Auch hier werden größere Mengen an polyfunktionellen Halogenkohlenwasserstoffen, bezogen auf den Basenstickstoff im Vorprodukt, eingesetzt als bei den erfindungsgemäßen Kondensaten.

Aus der DE-A 3 721 057 sind wasserlösliche Kondensate aus Polyamidaminen und polyfunktionellen Verbindungen bekannt. Die Polyamidamine werden dabei aus Dicarbonsäuren und Polyalkylenpolyaminen hergestellt. Dabei entstehen hochverzweigte Polykondensate, die insbesondere bei hohem Umsatz der Aminogruppen sehr leicht vernetzen können und nicht die gewünschte Wirksamkeit als Papierhilfsmittel aufweisen.

Darüber hinaus besitzen die in den Beispielen der DE-A 3 721 057 aufgeführten Polykondensate eine hohe Viskosität, die ihre Anwendung erschwert.

Die Schließung der Wasserkreisläufe in der Papierindustrie führt zu einer verstärkten Anreicherung verschiedenartigster Störstoffe bei der Papierherstellung. Dadurch wird die Wirksamkeit der eingesetzten Papierhilfsmittel nachteilig beeinflußt.

Aufgabe der Erfindung war es daher, wirksame, störstoffunempfindliche Hilfsmittel für die Herstellung von Papier bereitzustellen, die nicht den Nachteil einer zu hohen Viskosität aufweisen.

Es wurde nun gefunden, daß man ausgezeichnet wirksame Mittel zur Erhöhung der Retention von Fasern, Füllstoffen und Pigmenten sowie zur Beschleunigung der Entwässerung bei der Papierherstellung und als Flockungsmittel bei der Aufbereitung von Abwässern der Papierherstellung durch Filtration, Sedimentation und Flotation erhält, wenn man als wirksame Komponente ein oder mehrere neue stickstoffhaltige Polykondensate einsetzt, welche durch Umsetzung von
- A: wasserlöslichen Polyamidaminen mit einem Molekulargewicht (Gewichtsmittel) von 2.000 bis 20.000, hergestellt aus
- A.1: Polyalkylenpolyaminen der Formeln 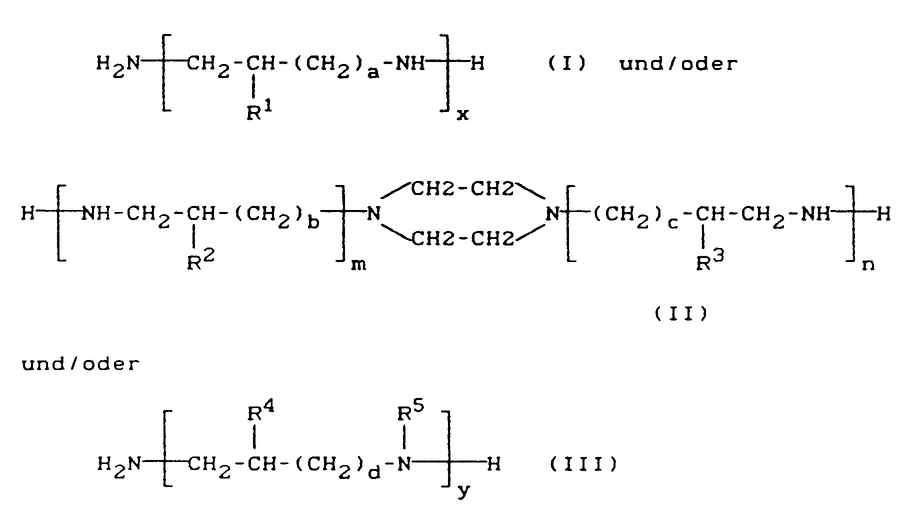 worin
- R¹, R², R³ und R⁴: unabhängig voneinander für Wasserstoff oder Methyl,
- R⁵: für Wasserstoff oder den Rest 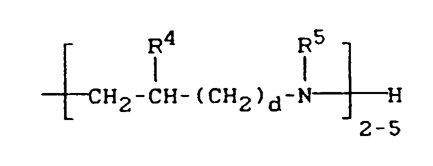
- a, b, c und d: unabhängig voneinander für 0 oder 1,
- x und y: für eine ganze Zahl von 3 bis 25, bzw. y nur 3,
- m: für eine ganze Zahl von 1 bis 20,
- n: für eine ganze Zahl von 0 bis 20, vorzugsweise 2 bis 20
stehen,
und
- A.2: aliphatischen Dicarbonsäuren oder Dicarbonsäureestern der Formel 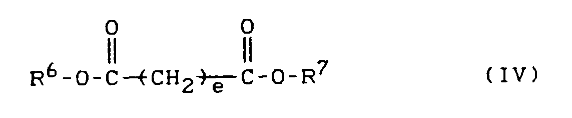 worin
- R⁶ und R⁷: unabhängig voneinander für Wasserstoff oder einen C₁-C₄-Alkylrest
und
- e: für eine ganze Zahl von 0 bis 8 stehen,
im Molverhältnis A.1 : A.2 von 0,75 : 1 bis 1,3 : 1, bevorzugt 0,9 : 1 bis 1,25 : 1, und besonders bevorzugt 0,9:1 bis 1,15:1 mit
- B: gegenüber Aminogruppen reaktiven polyfunktionellen Halogenkohlenwasserstoffen der Formel

X-M-Y (V)

worin
- X und Y: unabhängig voneinander Chlor, Brom oder Iod und
- M: eine C₂-C₆-Alkylen- oder Xylylen-Gruppe bedeutet,
im Molverhältnis von 0,01 bis 0,4 Mol, vorzugsweise 0,05 bis 0,15 Mol der Komponente B pro Mol Basenstickstoff der Komponente A,
und anschließende Umsetzung des aus A und B erhaltenen Polykondensats
mit
- C: einer Aminkomponente der Formel 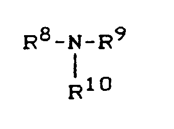 in der
- R⁸: für Wasserstoff oder einen Alkylrest mit 1 bis 4 Kohlenstoffatomen steht und
- R⁹ und R¹⁰: gleich oder verschieden sind und für einen Alkylrest mit 1 bis 4 Kohlenstoffatomen oder einen 2-Hydroxyethyl-, 2-Hydroxypropyl-, 2-Hydroxyethoxyethyl- oder einen 2-Hydroxypropoxy-propyl-Rest stehen, im Molverhältnis von 0,05 bis 0,5 Mol der Komponente C pro Mol der Komponente B
erhältlich sind.

Bevorzugte Polyalkylenpolyamine sind beispielsweise N-Aminoalkyl-Piperazin-Derivate.

Die erfindungsgemäßen Polykondensate werden bevorzugt hergestellt durch Umsetzung von A, B und C in der oben beschriebenen Reihenfolge.

Die Herstellung der erfindungsgemäßen Polykondensate, d.h. Reaktionsprodukte A + B aus den basischen Vorprodukten A und den polyfunktionellen Halogenkohlenwasserstoffen B erfolgt nach an sich bekannten Methoden. Man setzt dabei beispielsweise Mischungen aus A und B bei pH-Werten über 8 und Temperaturen zwischen 30 und 150°C, gegebenenfalls unter Druck, solange um, bis eine Probe des Gemisches als 25%ige wäßrige Lösung bei 25°C eine Viskosität von zumindest 50 mPa.s aufweist.

Die Kondensationsreaktion kann beispielsweise bei Drucken zwischen 0,5 und 30 bar, vorzugsweise 1 bis 10 bar, oberhalb des Siedepunktes der gegenüber Aminogruppen polyfunktionellen Dihalogenverbindung ausgeführt werden.

Häufig ist es dabei von Vorteil, die Dihalogenverbindungen portionsweise nach und nach zuzusetzen, bis die gewünschte Viskosität erreicht ist.

Danach wird das Reaktionsprodukt mit der Komponente C bei 100 bis 150°C, gegebenenfalls unter Druck, und bei pH-Werten über 7 solange umgesetzt, bis eine konstante Viskosität erreicht ist.

Durch Verdünnen mit Wasser wird der Feststoffgehalt anschließend auf den gewünschten Endwert eingestellt. Es werden so lagerstabile, klare, wäßrige Lösungen basischer Polykondensate erhalten, die bei 25°C und einem Feststoffgehalt von 20 bis 60 Gew.-%, vorzugsweise 25 bis 50 Gew.-%, eine Viskosität von 50 bis 4.000 mPa.s, bevorzugt 150 bis 3.000 mPa.s, aufweisen.

Die erfindungsgemäßen Polykondensate weisen einen pH-Wert von 8 bis 12, vorzugsweise 8,5 bis 11, auf. Sie sind durch ein Mindestmolekulargewicht von 5.000 gekennzeichnet, wobei die obere Grenze durch die Bedingung der Wasserlöslichkeit festgelegt ist.

Als Polyalkylenpolyamine A.1 seien beispielsweise genannt:
das durch diskontinuierliche (s. Houben-Weyl, 4. Auflage, Bd. XI/1, S. 44) oder kontinuierliche (s. US 1832534 bzw. US 2049467) Umsetzung von 1,2-Dichlorethan mit wäßrigem Ammoniak anfallende Gemisch von Verbindungen (I) mit x ≧ 3, das z.B. dadurch erhältlich ist, daß man nach der Kondensation niedrigsiedende Anteile (x ≧ 3) abdestilliert.

Als aliphatische Dicarbonsäuren bzw. Dicarbonsäure-Derivate A.2 seien bevorzugt genannt:
Bernsteinsäure, Glutarsäure, Adipinsäure und Sebacinsäure, Bernsteinsäurediethylester, Glutarsäurediethylester, Adipinsäurediethylester und Sebacinsäurediethylester.

Als polyfunktionelle Verbindungen B seien beispielsweise genannt:
1,2-Dichlorethan, 1,2-Dichlorpropan, 1,3-Dichlorpropan, 1-Chlor-3-brom-propan, 1,4-Dichlorbutan, 1,4-Dichlorbuten(2), 1,6-Dichlorhexan und Xylylendichlorid.

Als Amine C seien beispielsweise genannt:
Diethanolamin, N-Methyl-diethanolamin, N-Cyclohexyl-diethanolamin, Diethyl-N-hydroxyethylamin, N-Methyl-bis-(hydroxypropyl)amin, Bis-(2-Hydroxyethoxy-ethyl)amin, N-Butyl-diethanolamin, Triethylamin, Dibutylamin.

Bei der Verwendung der erfindungsgemäßen Polyamine als Hilfsmittel zur Erhöhung der Retention von Fasern, Füllstoffen und Pigmenten sowie als Entwässerungsbeschleunigungsmittel geht man in an sich bekannter Weise so vor, daß man die erfindungsgemäßen Polykondensate in Form verdünnter wäßriger Lösungen der Papierrohstoffsuspension vor dem Stoffauflauf der Papiermaschine zusetzt.

Die Dosierstelle wird dabei so gewählt, daß eine gute Verteilung des Hilfsmittels in der Rohstoffsuspension gewährleistet ist, aber eine zu lange Kontaktzeit vermieden wird.

Die Menge an erfindungsgemäßem Polykondensat, die zur Erzielung der gewünschten retendierenden Wirkung und/oder der entsprechenden Entwässerungsbeschleunigung erforderlich ist, läßt sich in Vorversuchen leicht ermitteln. Im allgemeinen empfiehlt es sich, 0,005 bis 0,75 Gew.-% an Polykondensat, bezogen auf das Trockengewicht des Papiers, zu verwenden.

Bei der Verwendung der erfindungsgemäßen Polykondensate als Hilfsmittel zur Aufarbeitung von Papiermaschinenabwässern durch Filtration, Flotation oder Sedimentation setzt man in an sich bekannter Weise verdünnte wäßrige Lösungen dem Papiermaschinenabwasser vor Eintritt in den Stoffänger zu.

Je nach Zusammensetzung der Abwässer werden für eine ausreichende Koagulation der im Abwasser enthaltenden Papierrohstoffbestandteile Mengen von 0,05 bis 2 g erfindungsgemäßes Polykondensat pro m³ Abwasser eingesetzt.

Es zeigt sich, daß die erfindungsgemäßen Polykondensate im Vergleich zu bekannten Hilfsmitteln auf Basis von Polyamidaminen, Polyalkylenpolyaminen, Polyethern bzw. Polyethylenimin, gegenüber Störstoffen besonders unempfindlich sind.

So wird bei hohen Stoffdichten und bei Zusatz von Störstoffen eine deutliche Steigerung der Entwässerungsbeschleunigung gegenüber bekannten Hilfsmitteln festgestellt. Die Wirksamkeitssteigerung tritt sowohl bei Verwendung von Altpapier als auch bei Holzschliff auf.

Überraschenderweise erweist sich die verbesserte Wirkung der basischen, schwach kationischen Produkte als nahezu pH-unabhängig. So werden nicht nur im sauren pH-Bereich, sondern überraschend auch im neutralen und alkalischen Milieu Wirksamkeitssteigerungen hinsichtlich der Entwässerungsbeschleunigung erzielt.

Vorteil der erfindungsgemäßen Produkte ist weiterhin, daß zur Herstellung nur geringe Mengen Vernetzer notwendig sind, wodurch der Salzgehalt im Hilfsmittel und letztlich die Salzbelastung des Wasserkreislaufs reduziert werden kann. Außerdem ist zur Stabilisierung der erfindungsgemäßen Produkte keine Säurezugabe erforderlich.

Einige erfindungsgemäße Polykondensate und ihre Verwendung zur Entwässerungsbeschleunigung bei der Papierherstellung sind nachstehend beschrieben. Die angegebenen Prozentangaben stellen - soweit nicht anders vermerkt - Gewichtsprozente dar.

### Herstellungsbeispiele

### Herstellung der Polyalkylenpolyamine A.1

### Beispiel 1

Aus dem durch kontinuierliche Umsetzung von 1,2-Dichlorethan, wäßrigem Ammoniak und Ethylendiamin im Molverhältnis 1 : 17 : 0,5 bei 150 bis 225°C und 100 bar erhaltenen Reaktionsgemisch wird unter Druck zunächst Ammoniak abgetrennt. Dann werden bei 130 bis 135°C die entstandenen Basen mit überschüssiger 50%ier NaOH aus ihren Hydrochloriden in Freiheit gesetzt. Dabei destilliert der größte Teil des Wasers und des Ethylendiamins ab. Höhersiedende Basen scheiden sich flüssig ab.

Das so erhältliche Basengemisch weist im Durchschnitt neben 10 bis 20 % Wasser und 3 bis 5 % Ethylendiamin, 2 bis 3 % Aminoethylpiperazin, 15 bis 20 % Diethylentriamin, 1 % H₂N-CH₂CH₂-NH-CH₂CH₂-OH, 15 bis 20 % Triethylentetramin, 2 bis 4 % Tetraethylentetramin, 10 bis 15 % Tetraethylenpentamin, 7 bis 12 % Pentaethylenhexamin und etwa 8 bis 18 % höhere Polyethylenpolyamine sowie geringere Mengen an Kochsalz und Natriumhydroxid auf.

Aus diesem Gemisch werden dann zunächst unter Normaldruck, dann im Vakuum bis 10 mbar das restliche Wasser, Ethylendiamin, Diethylentriamin, Aminoethylpiperazin, H₂N-CH₂CH₂-NH-CH₂CH₂-OH sowie der größere Teil des Tri- und Tetraethylentetramins abgetrennt. Das so erhaltene Basengemisch weist 60 bis 90 % Tetraethylenpentamin, Pentaethylenhexamin und höhere Polyethylenpolyamine auf.

### Beispiel 2

Aus dem gemäß Beispiel 1 erhaltenen Basengemisch (Sumpf der Tetramin-Kolonne) wird restliches Tetramin sowie der größte Teil des Tetraethylenpentamins bei 2 bis 3 mbar und 200 bis 230°C Sumpftemperatur abgetrennt. Das so anfallende Basengemisch weist etwa 75 bis 90 % an Pentaethylenhexamin und höheren Polyethylenpolyaminen auf.

### Beispiel 3

Aus dem Basengemisch gemäß Beispiel 2 (Sumpf der Pentamin-Kolonne) wird bei 1 bis 2 mbar und einer Sumpftemperatur von 215 bis 240°C noch der größte Teil an Pentaethylenhexamin abgetrennt.

### Beispiel 4

Die gemäß Beispielen 1 bis 3 erhältlichen Basengemische werden mit entsprechenden Aminen bzw. Amingemischen so modifiziert, daß man ein Basengemisch folgender Zusammensetzung erhält:
30 bis 40 % Triethylentetramin, 10 bis 12 % Aminoethylpiperazin, 2 bis 5 % Tetraethylentetramin, 20 bis 25 % Tetraethylenpentamin, 10 bis 20 % Pentaethylenhexamin sowie 12 bis 18 % höhersiedende Polyethylenpolyamine.

Durch Zusatz von Wasser wird das Gemisch auf einen Feststoffgehalt von etwa 50 Gew.-% eingestellt.

### Herstellung der Polyamidamine A

### Beispiel 5

In einem 5 m³-Kessel werden vorgelegt: 560 kg Adipinsäure und 1.374 kg eines Polyalkylenpolyamins gemäß Beispiel 2. In 3 Stunden wird langsam auf 150°C Innentemperatur hochgeheizt, wobei der Rührer bei 50°C eingeschaltet wird.

Für 15 Minuten wird bei einer Kopftemperatur von 105°C das Produkt am Rückfluß gehalten und danach auf Destillatabnahme umgestellt. In 5 Stunden wird auf eine Innentemperatur von 190°C geheizt, wobei kontinuierlich Destillat abgenommen wird. Anschließend stellt man wieder auf Rückfluß und setzt in 1 Stunde 1.760 l Wasser zu. Das Produktgemisch kühlt dabei auf etwa 90°C ab und wird für 1 Stunde nachgerührt.

| | |
|---|---|
| Viskosität: | 520 mPa.s (30°C) |
| Feststoffgehalt: | 48,7 Gew.-% |
| Basenstickstoffgehalt: | 202 g/Val |
| pH-Wert: | 11,3 |

### Beispiel 6

In einem 5 m³-Kessel legt man bei 30°C vor: 482 kg Adipinsäure, 850 kg eines Polyalkylenpolyamins gemäß Beispiel 2 und 536 kg eines in Wasser gelösten Polyalkylenpolyamins gemäß Beispiel 4. In 1 Stunde wird das Gemisch auf 128°C aufgeheizt und wird bei einer Kopftemperatur von 101°C für 1 Stunde am Rückfluß gehalten.

Im Anschluß wird auf Destillatabnahme geschaltet und in 4,5 Stunden gleichmäßig auf eine Innentemperatur von 201°C erhitzt, wobei kontinuierlich eine Destillatmenge von insgesamt 363 l abgenommen wird. Nun wird unter Rückfluß in 1 Stunde mit 1.450 l Wasser verdünnt. Hierbei kühlt das Produkt auf etwa 100°C ab und wird ohne Beheizung für 1 Stunde nachgerührt.

| | |
|---|---|
| Viskosität: | 450 mPa.s (25°C) |
| Feststoffgehalt: | 48,7 Gew.-% |
| Basenstickstoffgehalt: | 191 g/Val |
| pH-Wert: | 11,4 |

### Beispiel 7

Man legt 1.985,5 g eines Polyalkylenpolyamins gemäß Beispiel 3 vor, fügt 730 g Adipinsäure zu und heizt in 1 Stunde auf 150°C (Rückfluß).

Anschließend rührt man eine Stunde bei dieser Temperatur nach, stellt auf Destillatabnahme um und erhitzt auf 175°C. Nachdem 130 ml abdestilliert sind, wird ein leichtes Vakuum angelegt und man destilliert bei 175°C nochmals 50 ml ab. Danach kühlt man auf 150°C ab, versetzt mit 2.500 ml Wasser, rührt eine Stunde nach und filtriert das fertige Produkt ab.

| | |
|---|---|
| Viskosität: | 2.777 mPa.s (25°C) |
| Feststoffgehalt: | 49,1 Gew.-% |
| Basenstickstoffgehalt: | 188 g/Val |
| pH-Wert: | 11,4 |

### Beispiel 8

In einem 6 l-Autoklaven legt man bei 40°C vor: 2.000 g einer 50%igen wäßrigen Lösung eines Polyamidamins gemäß Beispiel 5 und 3.000 ml Wasser. Unter Rühren wird das Gemisch auf 125°C erhitzt. Innerhalb von 2 1/4 Stunden setzt man nun 80 g 1,2-Dichlorethan zu. Nach weiteren 10 Minuten werden 9,6 g N-Methyl-diethanolamin und 450 ml H₂O zugesetzt und 30 Minuten bei 120°C gerührt. Zum Schluß wird auf 38 % Feststoffgehalt eingeengt.

| | |
|---|---|
| Viskosität: | 990 mPa.s (25°C) |
| Feststoffgehalt: | 38,0 Gew.-% |
| pH-Wert: | 9,1 |

### Beispiel 9

In einem 6 l-Autoklaven legt man bei 30°C vor: 2.000 g einer Polyamidamin-Lösung gemäß Beispiel 6 und 3.000 ml Wasser. Im Anschluß erhitzt man unter Rühren auf 125°C und dosiert in 2 1/2 Stunden 80 g 1,2-Dichlorethan zu. Anschließend gibt man 9,6 g N-Methyl-diethanolamin in 450 ml H₂O zu. Man rührt jetzt 30 Minuten bei 120°C nach, belüftet und filtriert dann das abgekühlte Produkt ab und stellt den Feststoffgehalt auf 38 % ein, indem man die entsprechende Menge Wasser im Vakuum abdestilliert.

| | |
|---|---|
| Viskosität: | 1.100 mPa.s (25°C) |
| Feststoffgehalt: | 38,0 Gew.-% |
| pH-Wert: | 9,0 |

### Beispiel 10

In einem 6 l-Stahlautoklaven legt man ein Gemisch aus 1.200 g einer 50%igen Polyamidamin-Lösung gemäß Beispiel 7 und 600 ml Wasser vor. Unter Rühren wird das Gemisch auf 125°C erhitzt und in 2 Stunden 47,0 g 1,2-Dichlorethan zugepumpt. Hierbei steigt die Viskosität deutlich an. Nach 10 Minuten Nachrührzeit gibt man 4,8 g Triethylamin in 244 g Wasser zu. Man rührt 30 Minuten nach, belüftet, entgast und stellt den gewünschten Feststoffgehalt (38 %) ein.

| | |
|---|---|
| Viskosität: | 900 mPa.s (25°C) |
| Feststoffgehalt: | 38,0 Gew.-% |
| pH-Wert: | 9,3 |

### Anwendungsbeispiele

### Beispiel 11

Als Maß für die auf einer Papiermaschine zu erwartende Entwässerungsbeschleunigung wurde die sogenannte Entwässerungszeit bestimmt.

Hierzu wurde in einem Mahlgradprüfer nach Schopper-Riegler die Zeit (sec) gemessen, die zur Einstellung eines bestimmten Wasservolumens im Auslaufbecher erforderlich ist. Es gilt dabei: Je kürzer die gemessene Zeit, umso besser die erzielbare Entwässerungsbeschleunigung.

Zur Messung wurden verwendet:
1. Stoff A
   Altpapier mit 10 % China Clay und
   0,5 % Aluminiumsulfat
   als Zusatz bezogen auf Faserstoff.
2. Stoff B
   70 % Holzschliff
   30 % ungebl. Kiefersulfat (Mahlgrad 50° SR)
   mit 40 % China Clay und
   0,5 % Aluminiumsulfat
   als Zusatz bezogen auf Faserstoff.
3. Stoffe A′ bzw. B′
   Zu den Stoffen A und B wurden jeweils
   1 % Holzinhaltsstoff-Konzentrat (Störstoff)
   zugegeben.

Sämtliche Stoffe wurden als 1,5 %ige Faserstoffsuspension am Schnellrührer angesetzt und zur Entwässerungsprüfung sauer bzw. neutral mit Hilfe von Schwefelsäure oder Natronlauge eingestellt.

Danach wurden jeweils 200 ml der 1,5 %igen Papierstoff-Suspension entnommen (3,0 g Papier-Feststoff) und mit 0,3 g (bzw. 0,6 g, 1,2 g) einer einprozentigen Verdünnung der erfindungsgemäßen Polykondensat-Lösungen (Beispiele 8 - 10) versetzt. Es werden somit 0,1 Gew.-%, 0,2 Gew.-% bzw. 0,4 Gew.-% Polykondensat-Lösung, bezogen auf Papier-Feststoff zugeführt (siehe Tab. 1 und 2).

Anschließend wurde mit Leitungswasser auf 1.000 ml aufgefüllt und mit Hilfe des Schopper-Riegler-Gerätes die entsprechende Entwässerungszeit bestimmt.

Die nachfolgenden Tabellen 1 und 2 veranschaulichen, daß die erfindungsgemäßen Polykondensate im sauren und neutralen pH-Bereich ohne und vor allem mit Störstoffzusatz eine ausgezeichnete Beschleunigung der Entwässerung ergeben.

**Tabelle 1**

| Entwässerungszeiten (sec) Stoff A (ohne Störstoff) und Stoff A' (mit Störstoff) | | | | | | | |
|---|---|---|---|---|---|---|---|
| Polykondensat aus | Einsatzmenge Stoff | **pH5** | | | **pH7** | | |
| | | 0,1 % | 0,2 % | 0,4 % | 0,1 % | 0,2 % | 0,4 % |
| Bsp. 8 | A | 75,0 | 68,8 | 68,0 | 92,8 | 65,3 | 46,7 |
| | A' | 103,5 | 77,0 | 69,2 | 139,0 | 103,0 | 57,2 |
| Bsp. 9 | A | 74,5 | 69,0 | 68,0 | 95,5 | 66,8 | 47,3 |
| | A' | 101,5 | 77,7 | 67,3 | 141,8 | 106,0 | 59,3 |
| Bsp. 10 | A | 77,5 | 74,2 | 73,2 | 96,2 | 72,0 | 51,5 |
| | A' | 103,2 | 83,2 | 74,2 | 142,5 | 108,5 | 63,7 |
| ohne Zusatz | A | 128,5 | 128,5 | 128,5 | 145,0 | 145,0 | 145,0 |
| | A' | 130,0 | 130,0 | 130,0 | 151,0 | 151,0 | 151,0 |

**Tabelle 2**

| Entwässerungsbeschleunigung (sec) Stoff B (ohne Störstoff) und Stoff B' (mit Störstoff) | | | | | |
|---|---|---|---|---|---|
| Polykondensat aus | Einsatzmenge | **pH5** | | **pH7** | |
| | | 0,2 % | 0,4 % | 0,2 % | 0,4 % |
| Beispiel 8 | Stoff B | 62,8 | 51,0 | 80,0 | 45,2 |
| | B' | 99,4 | 65,0 | 125,0 | 73,0 |
| Beispiel 9 | Stoff B | 62,0 | 52,0 | 81,7 | 47,0 |
| | B' | 98,5 | 67,0 | 128,0 | 74,7 |
| Beisp. 10 | Stoff B | 65,2 | 53,0 | 82,3 | 49,0 |
| | B' | 104,5 | 74,6 | 125,5 | 78,6 |
| ohne Zusatz | Stoff B | 145,5 | 145,5 | 147,5 | 147,5 |
| | B' | 153,5 | 153,5 | 149,0 | 149,0 |

## Patentansprüche

1. Wasserlösliche, basische Polykondensate, die durch Umsetzung von
A wasserlöslichen Polyamidaminen mit einem Molekulargewicht (Gewichtsmittel) von 2.000 bis 20.000, hergestellt aus
A.1 Polyalkylenpolyaminen der Formeln 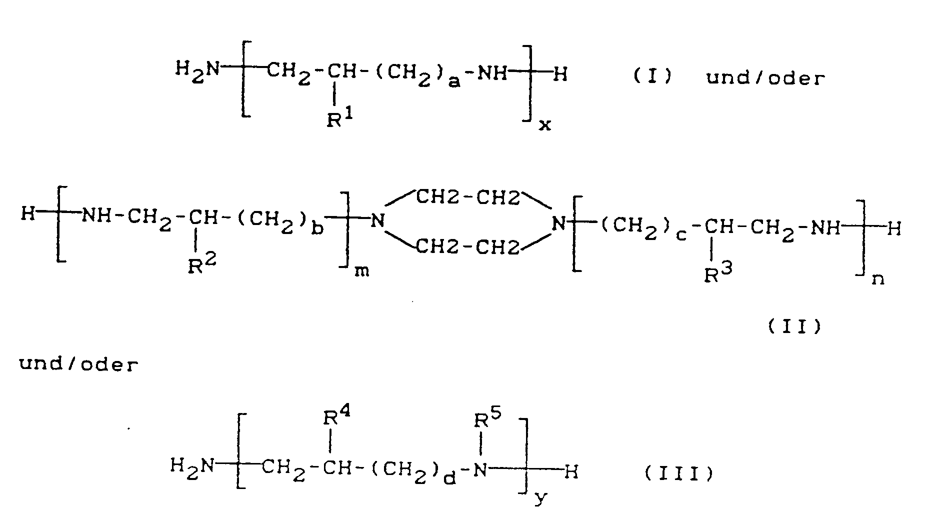 worin
R¹, R², R³ und R⁴ unabhängig voneinander für Wasserstoff oder Methyl,
R⁵ für Wasserstoff oder den Rest 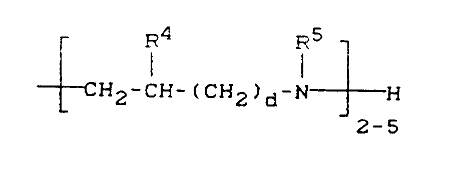
a, b, c und d unabhängig voneinander für 0 oder 1,
x und y für eine ganze Zahl von 3 bis 25, bzw. y nur 3,
m für eine ganze Zahl von 1 bis 20,
n für eine ganze Zahl von 0 bis 20,
stehen, und
A.2 aliphatischen Dicarbonsäuren oder Dicarbonsäureestern der Formel 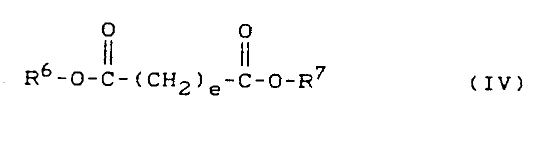 worin
R⁶ und R⁷ unabhängig voneinander für Wasserstoff oder einen C₁-C₄-Alkylrest
und
e für eine ganze Zahl von 0 bis 8 stehen,
im Molverhältnis A.1 : A.2 von 0,75 : 1 bis 1,3 : 1, mit
B gegenüber Aminogruppen reaktiven polyfunktionellen Halogenkohlenwasserstoffen der Formel
X-M-Y (V)
worin
X und Y unabhängig voneinander Chlor, Brom oder Iod und
M eine C₂-C₆-Alkylen- oder Xylylen-Gruppe bedeutet,
im Molverhältnis von 0,01 bis 0,4 Mol der Komponente B pro Mol Basenstickstoff der Komponente A,
und anschließende Umsetzung des aus A und B erhaltenen Polykondensats mit
C einer Aminkomponente der Formel 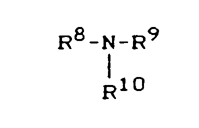 in der
R⁸ für Wasserstoff oder einen Alkylrest mit 1 bis 4 Kohlenstoffatomen steht und
R⁹ und R¹⁰ gleich oder verschieden sind und für einen Alkylrest mit 1 bis 4 Kohlenstoffatomen oder einen 2-Hydroxyethyl-, 2-Hydroxypropyl-, 2-Hydroxyethoxyethyl- oder einen 2-Hydroxypropoxy-propyl-Rest stehen, im Molverhältnis von 0,05 bis 0,5 Mol der Komponente C pro Mol B
erhältlich sind.

2. Wasserlösliche, basische Polykondensate nach Anspruch 1, deren 25 bis 50 gew.-%ige Lösungen eine Viskosität von 50 bis 4.000 mPa.s (25°C) aufweisen.

3. Verfahren zur Herstellung eines basischen, wasserlöslichen Polykondensates, dadurch gekennzeichnet, daß man
A wasserlösliche Polyamidamine mit einem Molekulargewicht (Gewichtsmittel) von 2.000 bis 20.000, hergestellt aus
A.1 Polyalkylenpolyaminen der Formeln 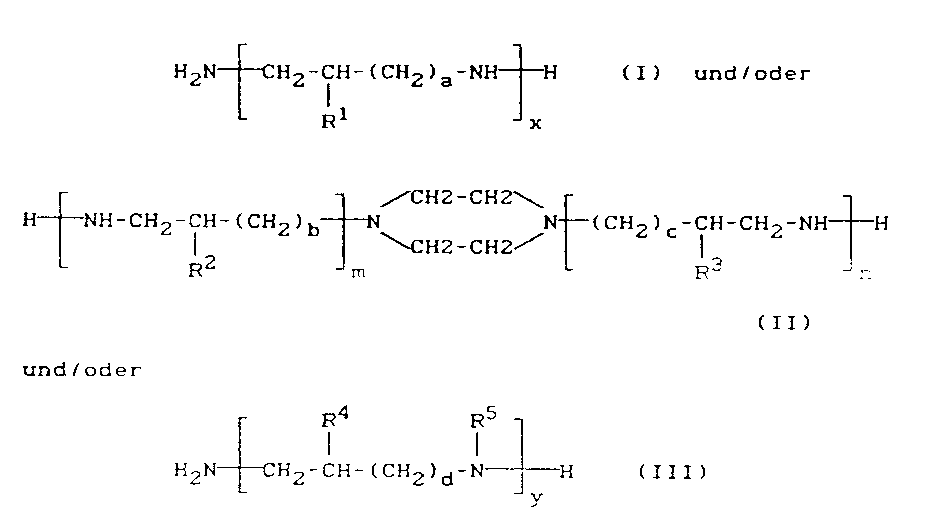 worin
R¹, R², R³ und R⁴ unabhängig voneinander für Wasserstoff oder Methyl,
R⁵ für Wasserstoff oder den Rest 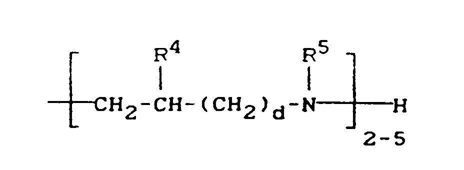
a, b, c und d unabhängig voneinander für 0 oder 1,
x und y für eine ganze Zahl von 3 bis 25, bzw. y nur 3,
m für eine ganze Zahl von 1 bis 20,
n für eine ganze Zahl von 0 bis 20,
stehen, und
A.2 aliphatischen Dicarbonsäuren oder Dicarbonsäureestern der Formel 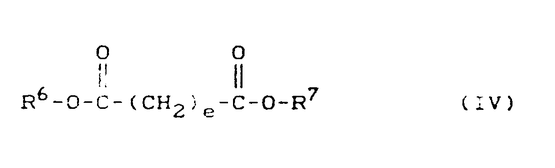 worin
R⁶ und R⁷ unabhängig voneinander für Wasserstoff oder einen C₁-C₄-Alkylrest
und
e für eine ganze Zahl von 0 bis 8 stehen,
im Molverhältnis A.1 : A.2 von 0,75 : 1 bis 1,3 : 1, mit
B gegenüber Aminogruppen reaktiven polyfunktionellen Halogenkohlenwasserstoffen der Formel
X-M-Y (V)
worin
X und Y unabhängig voneinander Chlor, Brom oder Iod und
M eine C₂-C₆-Alkylen- oder Xylylen-Gruppe bedeutet,
im Molverhältnis von 0,01 bis 0,4 Mol der Komponente B pro Mol Basenstickstoff der Komponente A, umsetzt,
und das Reaktionsprodukt aus A und B anschließend mit
C einer Aminkomponente der Formel 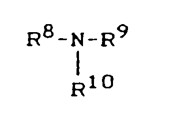 in der
R⁸ für Wasserstoff oder einen Alkylrest mit 1 bis 4 Kohlenstoffatomen steht und
R⁹ und R¹⁰ gleich oder verschieden sind und für einen Alkylrest mit 1 bis 4 Kohlenstoffatomen oder einen 2-Hydroxyethyl-, 2-Hydroxypropyl-, 2-Hydroxyethoxyethyl- oder einen 2-Hydroxypropoxy-propyl-Rest stehen, im Molverhältnis von 0,05 bis 0,5 Mol der Komponente C pro Mol B,
bei etwa 100 bis 150°C, gegebenenfalls unter Druck und bei pH-Werten über 7 umsetzt.

4. Wäßrige Retentionsmittel, die wasserlösliche, basische Polykondensate des Anspruchs 1 enthalten.

5. Verwendung der Polykondensate der Ansprüche 1 bis 3 bei der Herstellung von Papier.

## Claims

1. Water-soluble basic polycondensates obtainable by reaction of
A water-soluble polyamidoamines with a molecular weight (weight average) of 2,000 to 20,000 prepared from
A.1 polyalkylene polyamines corresponding to the following formulae: 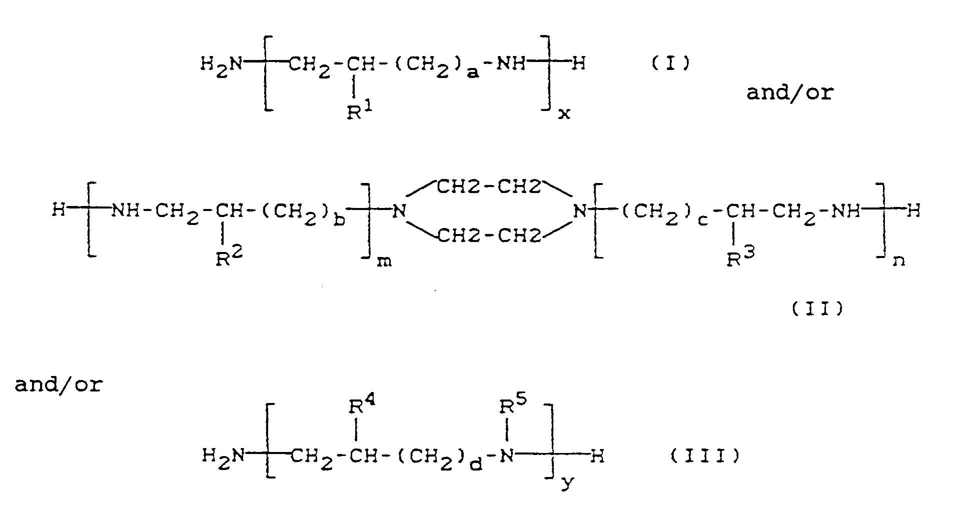 in which
R¹, R², R³ and R⁴ independently of one another represent hydrogen or methyl,
R⁵ represents hydrogen or a group of the following formula: 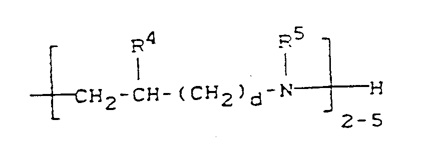
a, b, c and d independently of one another have values of 0 or 1,
x and y are integers of 3 to 25 or y has a value of only 3,
m is an integer of 1 to 20,
n is an integer of 0 to 20,
and
A.2 aliphatic dicarboxylic acids or dicarboxylic acid esters corresponding to the following formula: 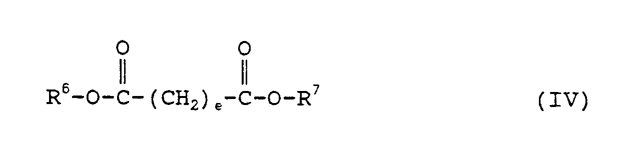 in which
R⁶ and R⁷ independently of one another represent hydrogen or a C₁₋₄ alkyl radical
and
e is an integer of 0 to 8,
in a molar ratio of A.1 to A.2 of 0.75:1 to 1.3:1 with
B amino-reactive polyfunctional halogenated hydrocarbons corresponding to the following formula:
X-M-Y (V)
in which
X and Y independently of one another represent chlorine, bromine or iodine and
M is a C₂₋₆ alkylene or xylylene group,
in a molar ratio of 0.01 to 0.4 mol of component B per mol of base nitrogen of component A,
and subsequent reaction of the polycondensate obtained from A and B with
C an amine component corresponding to the following formula: 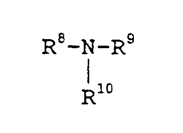 in which
R⁸ represents hydrogen or a C₁₋₄ alkyl radical and
R⁹ and R¹⁰ may be the same or different and represent a C₁₋₄ alkyl radical or a 2-hydroxyethyl, 2-hydroxypropyl, 2-hydroxyethoxyethyl or 2-hydroxypropoxypropyl radical,
in a molar ratio of 0.05 to 0.5 mol of component C per mol of B.

2. Water-soluble basic polycondensates as claimed in claim 1 of which 25 to 50% by weight solutions have a viscosity of 50 to 4,000 mPa.s (25°C).

3. A process for the production of a basic water-soluble polycondensate, characterized in that
A water-soluble polyamidoamines with a molecular weight (weight average) of 2,000 to 20,000 prepared from
A.1 polyalkylene polyamines corresponding to the following formulae: 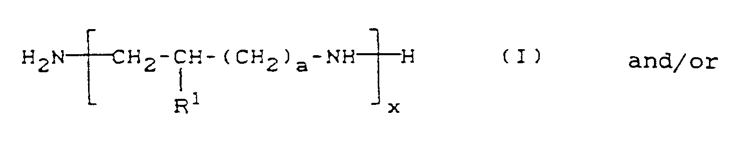 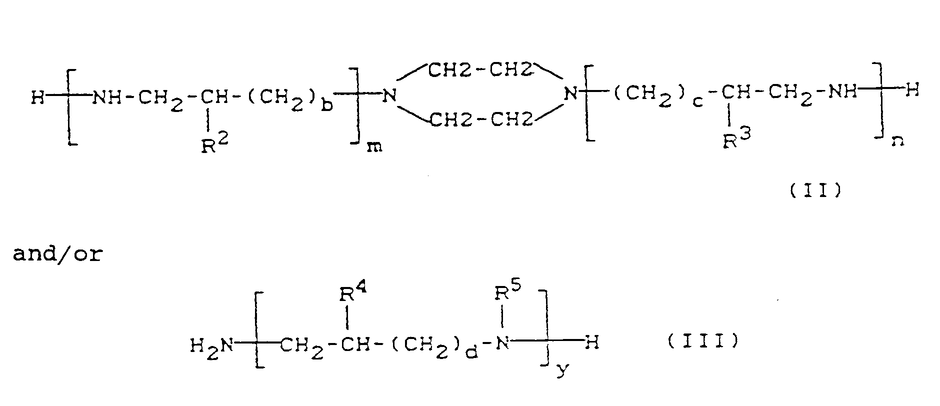 in which
R¹, R², R³ and R⁴ independently of one another represent hydrogen or methyl,
R⁵ represents hydrogen or a group of the following formula: 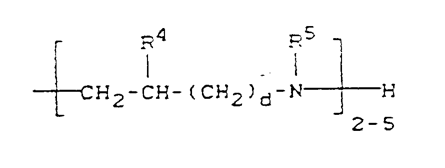
a, b, c and d independently of one another have values of 0 or 1,
x and y are integers of 3 to 25 or y has a value of only 3,
m is an integer of 1 to 20,
n is an integer of 0 to 20,
and
A.2 aliphatic dicarboxylic acids or dicarboxylic acid esters corresponding to the following formula: 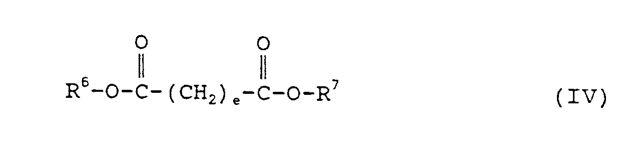 in which
R⁶ and R⁷ independently of one another represent hydrogen or a C₁₋₄ alkyl radical
and
e is an integer of 0 to 8,
in a molar ratio of A.1 to A.2 of 0.75:1 to 1.3:1 are reacted with
B amino-reactive polyfunctional halogenated hydrocarbons corresponding to the following formula:
X-M-Y (V)
in which
X and Y independently of one another represent chlorine, bromine or iodine and
M is a C₂₋₆ alkylene or xylylene group,
in a molar ratio of 0.01 to 0.4 mol of component B per mol of base nitrogen of component A,
and the polycondensate obtained from A and B is subsequently reacted with
C an amine component corresponding to the following formula: 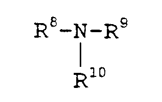 in which
R⁸ represents hydrogen or a C₁₋₄ alkyl radical and
R⁹ and R¹⁰ may be the same or different and represent a C₁₋₄ alkyl radical or a 2-hydroxyethyl, 2-hydroxypropyl, 2-hydroxyethoxyethyl or 2-hydroxypropoxypropyl radical,
in a molar ratio of 0.05 to 0.5 mol of component C per mol of B,
optionally under pressure at temperatures in the range from about 100 to 150°C and at pH values above 7.

4. Aqueous retention agents containing the water-soluble basic polycondensates claimed in claim 1.

5. The use of the polycondensates claimed in claims 1 to 3 in the production of paper.

## Revendications

1. Polycondensats basiques solubles dans l'eau qu'on obtient par réaction de
A. polyamideamines solubles dans l'eau d'un poids moléculaire (moyenne en poids) de 2 000 à 20 000 préparées à partir de
A.1 polyalkylènepolyamines de formules 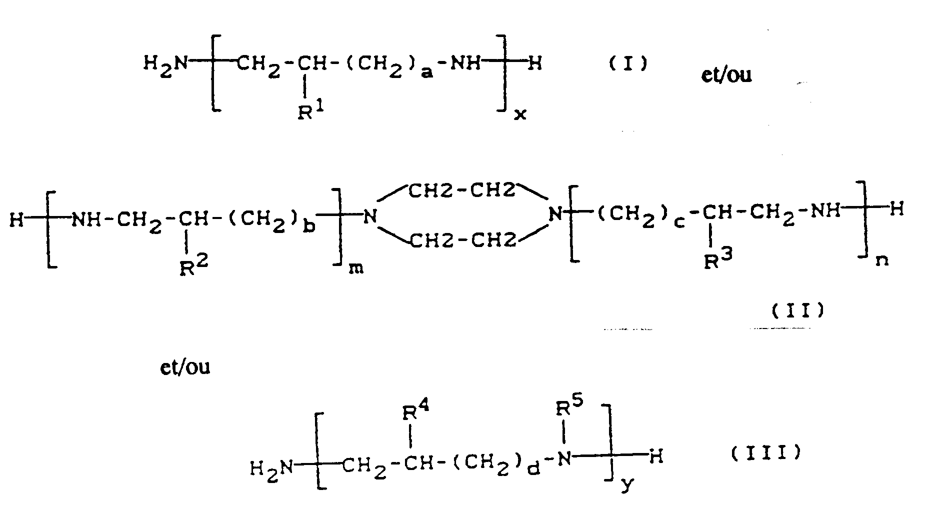 dans lesquelles
R¹, R², R³ et R⁴ représentent indépendamment l'un de l'autre un hydrogène ou un méthyle,
R⁵ représente l'hydrogène ou le reste 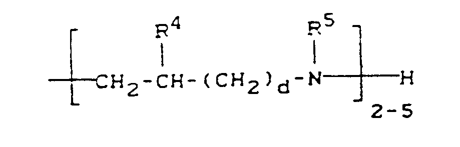
a, b, c et d représentent indépendamment l'un de l'autre 0 ou 1,
x, et y représentent un nombre entier de 3 à 25, ou y est seulement 3,
m représente un nombre entier de 1 à 20,
n représente un nombre entier de 0 à 20,
et,
A.2. d'acides dicarboxyliques aliphatiques ou d'esters d'acides dicarboxyliques de formule (IV) 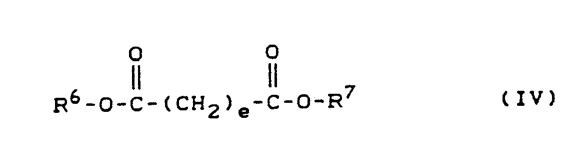 dans laquelle
R⁶ et R⁷ représentent indépendamment l'un de l'autre un hydrogène ou un reste alkyle C₁-C₄
et
e représente un nombre entier de 0 à 8, en proportion molaire A.1 : A.2 de 0,75 : 1 à 1,3 :1, avec des
B. des hydrocarbures halogénés polyfonctionnels réactifs vis-à-vis des groupes amino de formule
X-M-Y (V)
dans laquelle
X et Y représentent indépendamment l'un de l'autre le chlore, le brome ou l'iode et
M représente un groupe alkylène C₂-C₆ ou xylylène,
en proportion molaire de 0,01 à 0,4 mol de composant B par mol d'azote basique du composant A,
et ensuite réaction du polycondensat obtenu à partir de A et B avec
C. un composant amine de formule 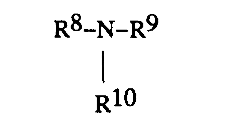 dans laquelle
R⁸ représente un hydrogène ou un reste alkyle de 1 à 4 atomes de carbone et
R⁹ et R¹⁰ sont identiques ou différents et représentent un reste alkyle de 1 à 4 atomes de carbone ou un reste 2-hydroxyéthyle, 2-hydroxypropyle, 2-hydroxyéthoxyéthyle ou un reste de 2-hydroxypropoxypropyle, en proportion molaire de 0,05 à 0,5 mol de composant C par mol de composant B.

2. Polycondensats basiques solubles dans l'eau selon la revendication 1, dont les solutions à 25 à 50 % en poids présentent une viscosité comprise entre 50 et 4 000 mPa.s (25°C).

3. Procédé de préparation d'un polycondensat basique soluble dans l'eau caractérisé en ce qu'on fait réagir
A. des polyamideamines solubles dans l'eau avec un poids moléculaire (moyenne en poids) de 2 000 à 20 000 préparées à partir de
A.1 Polyalkylènepolyamines de formules 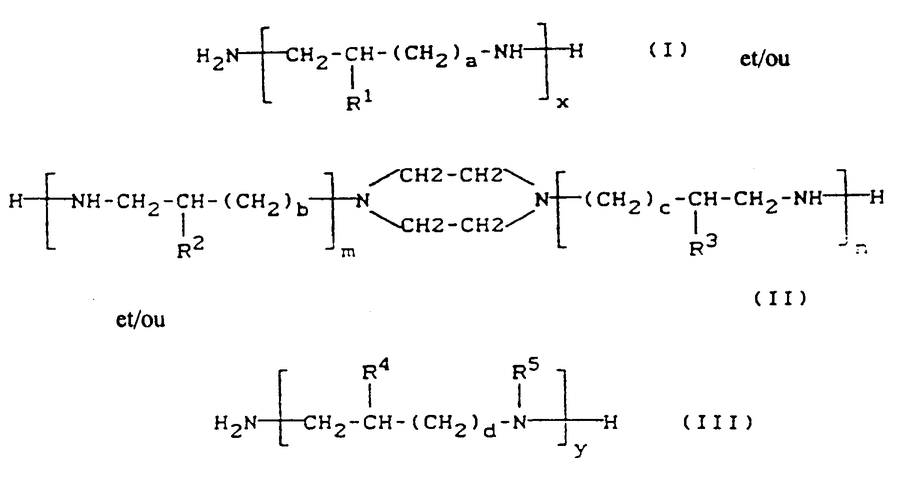 dans lesquelles
R¹, R², R³ et R⁴ représentent indépendamment l'un de l'autre un hydrogène ou un méthyle,
R⁵ représente l'hydrogène ou le reste 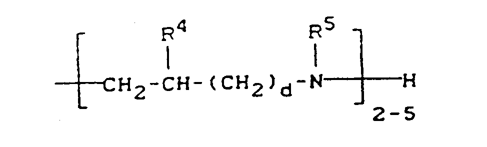
a, b, c et d représentent indépendamment l'un de l'autre 0 ou 1,
x, et y représentent un nombre entier de 3 à 25, ou y est seulement 3,
m représente un nombre entier de 1 à 20,
n représente un nombre entier de 0 à 20,
et,
A.2. d'acides dicarboxyliques aliphatiques ou d'esters d'acides dicarboxyliques de formule (IV) 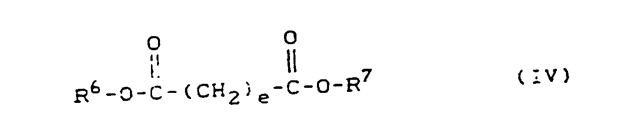 dans laquelle
R⁶ et R⁷ représentent indépendamment l'un de l'autre un hydrogène ou un reste alkyle C₁-C₄
et
e représente un nombre entier de 0 à 8, en proportion molaire A.1 : A.2 de 0,75 : 1 à 1,3 :1, avec des
B. des hydrocarbures halogénés polyfonctionnels réactifs vis-à-vis des groupes amino de formule
X-M-Y (V)
dans laquelle
X et Y représentent indépendamment l'un de l'autre le chlore, le brome ou l'iode et
M représente un groupe alkylène C₂-C₆ ou xylylène, en proportion molaire de 0,01 à 0,4 mol de composant B par mol d'azote basique du composant A,
et ensuite réaction du polycondensat obtenu à partir de A et B avec
C. un composant amine de formule 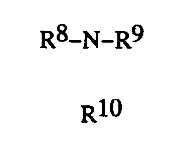 dans laquelle
R⁸ représente un hydrogène ou un reste alkyle de 1 à 4 atomes de carbone et
R⁹ et R¹⁰ sont identiques ou différents et représentent un reste alkyle de 1 à 4 atomes de carbone ou un reste 2-hydroxyéthyle, 2-hydroxypropyle, 2-hydroxyéthoxyéthyle ou un reste de 2-hydroxypropoxypropyle, en proportion molaire de 0,05 à 0,5 mol de composant C par mol de composant B entre environ 100 et 150°C, le cas échéant sous pression et à des pH supérieurs à 7.

4. Agents de rétention aqueux qui contiennent les polycondensats basiques solubles dans l'eau de la revendication 1.

5. Utilisation des polycondensats de la revendication 1 à 3 pour produire du papier.
